(19) **Europäisches Patentamt**

**European Patent Office**

**Office européen des brevets**

(11) **EP 1 474 925 B1**

(12) **FASCICULE DE BREVET EUROPEEN**

(45) Date de publication et mention
de la délivrance du brevet:
**21.06.2006 Bulletin 2006/25**

(21) Numéro de dépôt: **03702849.5**

(22) Date de dépôt: **07.02.2003**

(51) Int Cl.:
***H04N 7/167*** (2006.01)

(86) Numéro de dépôt international:
**PCT/IB2003/000427**

(87) Numéro de publication internationale:
**WO 2003/069910 (21.08.2003 Gazette 2003/34)**

(54) **METHODE DE GESTION DE LA FACTURATION D'UN SERVICE TELEDIFFUSE PAR UNITE DE TEMPS**

VERFAHREN ZUM VERWALTEN DER ABRECHNUNG EINER RUNDFUNKLEISTUNG PRO ZEITEINHEIT

METHOD FOR CONTROLLING THE BILLING OF A BROADCAST SERVICE BY UNITS OF TIME

(84) Etats contractants désignés:
**AT BE BG CH CY CZ DE DK EE ES FI FR GB GR HU IE IT LI LU MC NL PT SE SI SK TR**

(30) Priorité: **15.02.2002 CH 265022002**

(43) Date de publication de la demande:
**10.11.2004 Bulletin 2004/46**

(73) Titulaire: **NagraCard SA**
**1033 Cheseaux-sur-Lausanne (CH)**

(72) Inventeurs:
• **COCHARD, Jimmy**
**CH-1616 Attalens (CH)**
• **KUDELSKI, Henri**
**CH-1091 Grandvaux (CH)**
• **SASSELLI, Marco**
**CH-1803 Chardonne (CH)**

(74) Mandataire: **Wenger, Joel-Théophile**
**Leman Consulting S.A.**
**62 route de Clémenty**
**1260 Nyon (CH)**

(56) Documents cités:
**WO-A-01/91372          WO-A-01/95623**

**EP 1 474 925 B1**

**Description**

La présente demande concerne le domaine des récepteurs/décodeurs de services à accès conditionnel, en particulier la procédure de comptabilisation de la réception et d'utilisation de contenus à accès conditionnel.

Par contenu on entend un service d'informations boursière, de météo, de télévision généraliste, d'un événement sportif ou autres. Ces contenus peuvent être diffusés sur des unités d'utilisateurs tels qu'un décodeur de télévision à péage, un ordinateur voire un téléphone portable, un "palm-top", un PDA, une radio, une télévision; une borne multimédia.

Le flux numérique est encrypté afin de pouvoir en contrôler l'utilisation et de définir des conditions pour une telle utilisation. Cette encryption est réalisée grâce à des mots de contrôle (Control Words) qui sont changés à intervalle régulier (entre 5 et 30 secondes) afin de dissuader toute attaque visant à retrouver un tel mot de contrôle.

Pour que l'unité d'utilisateur puisse décrypter le flux encrypté par un mot de contrôle, ce dernier lui est envoyé indépendamment du flux dans un message de contrôle (ECM) encrypté par une clé propre au système de transmission entre le centre de gestion (CAS) et le module de sécurité de l'unité d'utilisateur. En effet, les opérations de sécurité sont effectuées dans une unité de sécurité (SC) qui est généralement sous la forme d'une carte à puce, réputée inviolable. Cette unité peut être soit de type amovible ou directement intégrée à l'unité d'utilisateur traitant des signaux tel qu'un décodeur de télévision à péage ou un récepteur DAB.

Lors de la décryption du message de contrôle (ECM), il est vérifié, dans l'unité de sécurité (SC), que le droit pour accéder au flux considéré est présent. Ce droit peut être géré par des messages d'autorisation (EMM) qui charge un tel droit dans l'unité (SC). D'autres possibilités sont également possibles tels que l'envoi de clés de décryptage.

La comptabilisation de l'utilisation de tels contenus est aujourd'hui basée sur le principe de l'abonnement ou de l'achat d'événement. L'abonnement permet de définir un droit associé à un ou des canaux de diffusion et permet à l'utilisateur d'obtenir ces canaux en clair si le droit est présent dans son unité de sécurité.

Parallèlement, il est possible de définir des droits propres à un contenu, tel qu'un film ou un match de football. L'utilisateur peut acquérir ce droit (achat par exemple) et ce contenu sera spécifiquement géré par ce droit. Cette méthode est connue sous l'appellation "pay-per-view" (PPV).

Lors du décryptage des mots de contrôle, il sera vérifié si un droit associé aux conditions d'accès est présent dans l'unité de sécurité.

Le mot de contrôle est retourné en clair à l'unité d'utilisateur que lorsque la comparaison est positive.

Cette manière de faire est satisfaisante pour bien des applications mais ne permet pas de répondre à certains besoins. Par exemple pour des informations boursières ou la diffusion de musique, qui ont comme caractéristiques de n'avoir pas de durée définie, les solutions décrites plus haut ne permettent que la comptabilisation par abonnement. De plus, de nouveau support tel que la diffusion de radio numérique (DAB) ou les jeux en ligne, présentent des besoins similaires de comptabilisation autre que par abonnement.

Ainsi, la personne qui ira consulter occasionnellement le cours de son action préférée devra souscrire aux mêmes conditions que celle qui utilise cet outil intensivement.

C'est pourquoi le but de la présente invention est d'intégrer dans le système d'accès conditionnel la gestion de l'utilisation pour une durée déterminée. Plusieurs contraintes liées au système de diffusion encrypté de la télévision à péage ne permettent pas d'appliquer aujourd'hui un principe équivalent à la téléphonie par exemple.

En effet, le module de sécurité (SC) ne dispose pas d'horloge interne et de plus, est placé extérieurement au décodeur ce qui signifie qu'il n'a pas accès aux fonctionnalités du décodeur. Ce module n'a à sa disposition que les mots de contrôle pour autoriser (ou ne pas autoriser) la décryption des données.

A cela s'ajoute le fait que les mots de contrôle sont changés à intervalle régulier, intervalle qui peut n'avoir aucune relation avec la période de comptabilisation.

Pour la suite de l'exposé, nous utiliserons l'expression "crypto-période" pour la durée pendant laquelle un mot de contrôle permet de décrypter le contenu arrivant à l'unité d'utilisateur, et "unité de facturation" pour la durée minimale de comptabilisation.

Alors que la crypto-période peut varier entre 0.5 et 30 secondes et répond à des critères de sécurité, l'unité de comptabilisation quant à elle peut être fixée être 10 secondes et 24 heures par exemple et répond à des critères marketing. Il faut savoir que l'unité de sécurité (SC), une fois décrypté le mot de contrôle valide pour la crypto-période, n'a plus de moyens pour vérifier si l'utilisation réelle a duré tout ou partie de cette crypto-période.

Le but de la présente invention est de permettre la facturation des unités de comptabilisation tout en tenant compte qu'il ne puisse y avoir aucune relation entre la crypto-période et l'unité de facturation.

Ce but est atteint par une méthode de comptabilisation temporelle d'accès à un flux de données encryptées par des mots de contrôle (CW) modifiés à des intervalles représentant une crypto-période (CP), ce flux étant reçu par une unité d'utilisateur (UU) reliée à une unité de sécurité (SC) en charge de vérifier les droits d'un utilisateur et de décrypter les mots de contrôle (CW), cette comptabilisation étant basée sur des unités de comptabilisation (CT) autorisant l'utilisation du service pour une durée allouée (AT), cette méthode comprenant les étapes suivantes:

a. commutation par l'utilisateur sur un flux encrypté constituant un service à accès par unité de temps,

b. réception par l'unité de sécurité (SC) de messages encryptés (ECM) contenant les mots de contrôle (CW) et des données propres audit service permettant de déterminer la durée allouée (AT) et son coût (CT) de l'unité de comptabilisation,

c. lecture d'une variable temporelle (Rdate) représentative de la durée durant laquelle l'utilisation dudit service est autorisée,

d. détermination, sur la base du temps courant (TC) si l'on se situe durant la durée d'autorisation définie par la variable temporelle (Rdate), et dans l'affirmative, autoriser le service en renvoyant les mots de contrôle (CW) à l'unité d'utilisateur (UU),

e. dans la négative, ordonner le débit d'une unité de comptabilisation (CT) et déterminer si le temps courant (TC) est compris dans une durée allouée (AT) adjacente à la durée définie par la variable temporelle (Rdate), dans l'affirmative déterminer la nouvelle valeur de la variable temporelle (Rdate) afin de déplacer cette dernière d'une durée allouée (AT), et autoriser le service en renvoyant les mots de contrôle (CW) en clair à l'unité d'utilisateur,

f. dans la négative charger la variable temporelle (Rdate) d'une durée allouée (AT) par rapport au temps courant (TC).

Cette méthode permet de tenir compte des événements passés, c'est-à-dire de la dernière utilisation de ce service pour déterminer la durée allouée à chaque unité de facturation. En effet, lorsque la durée de facturation est proche de la durée de la crypto-période, par exemple 20 sec. pour la crypto-période et 1 mn pour l'unité de facturation, le principe de reprendre la dernière échéance d'autorisation et d'y ajouter la durée allouée par unité de comptabilisation nouvellement acquise permet de rattraper toutes les incertitudes.

Il va de soi que l'une des étapes intermédiaires consiste à vérifier si l'utilisateur à bien le crédit suffisant pour accepter le débit d'une unité de comptabilisation avant de retourner les mots de contrôle.

Il est important de noter que la variable temporelle (Rdate) reste valide même si l'utilisateur change de service. Cette variable est propre à un service ou à un groupe de service. Au retour sur le service précédemment comptabilisé, cette variable est comparée avec l'instant courant et si ce dernier est compris dans la durée définie par la variable temporelle, le service est alors immédiatement autorisé sans comptabilisation d'unité supplémentaire.

Il existe plusieurs moyens de réaliser la fonction visée par la variable temporelle. Une première manière est l'utilisation d'un compteur de date qui contient l'instant de fin de l'autorisation du service. Si le temps courant est inférieur à ce compteur, on considère que le service est autorisé. A chaque dépassement de ce compteur, on ajoute la durée allouée (AT). On déplace ainsi ce pointeur qui est généralement stocké en mémoire EEPROM. Ceci permet d'éteindre l'unité d'utilisateur (UU) sans perdre l'instant de fin d'autorisation.

Selon une autre forme de réalisation, cette variable temporelle contient l'instant auquel une unité de comptabilisation a été débitée. La durée autorisée est dès lors constituée par une fenêtre définie par la variable Rdate et la durée allouée AT.

Une variante consiste à utiliser un compteur en charge de définir la période d'autorisation. Selon la forme de réalisation, ce compteur peut être un compteur temporel incrémenté par l'unité de sécurité ou peut être un compteur de messages ECM. En effet, la crypto-période étant un paramètre connu du système, il est possible de définir que l'unité de comptabilisation autorise le décryptage de 150 messages ECM. La durée allouée (AT) correspondra donc à un nombre de messages ECM.

L'invention sera mieux comprise grâce à la description détaillée qui va suivre et qui se réfère aux dessins annexés qui sont donnés à titre d'exemple nullement limitatif, à savoir:

- la figure 1 illustre un diagramme temps lors de la commutation sur un service soumis à la comptabilisation par unité de temps,

- la figure 2 illustre le cas on l'on se déplace en avant ou en arrière dans le flux encrypté,

- la figure 3 illustre un mode de réalisation particulièrement adapté aux enregistreurs numériques DVR en mode retour.

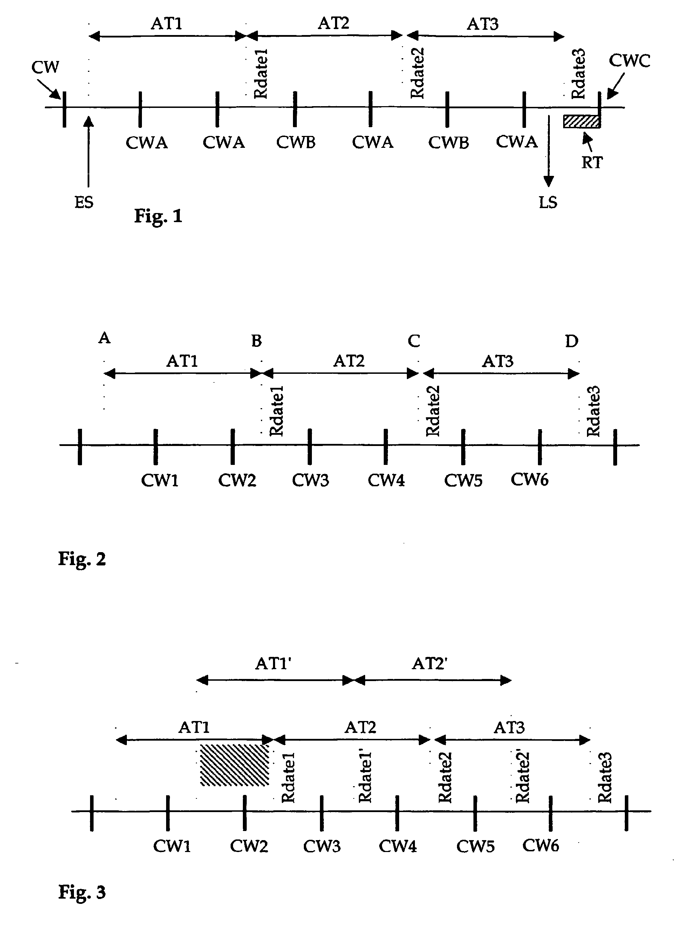

Sur la figure 1, les mots de contrôle CW sont illustrés par des traits épais noirs. Le moment de commutation sur le service est marqué par la flèche ES. A ce moment, le message ECM contenant le mot de contrôle CW valide durant cette période est transféré à la carte à puce SC. Le premier contrôle est de savoir si la variable temporelle Rdate est dans le futur. Dans l'affirmative aucun débit n'est effectué et le mot de contrôle CW est retourné au décodeur. Ce cas se présente pour les mots de contrôle dénommés CWA.

Selon une première forme de réalisation, le temps courant est transmis par l'intermédiaire des messages ECM. Dans ce cas, il est nécessaire d'introduire une étape préliminaire à savoir contrôler si la variable Rdate n'est pas trop dans le futur. Ceci est possible lorsque que l'on rediffuse la même émission, par exemple grâce à un enregistreur numérique DVR. Sans cette vérification, il serait possible de diffuser les dernières secondes d'une émission pour fixer la variable à un instant correspondant à la fin de l'émission et ensuite à diffuser toute l'émission depuis le début. La variable Rdate étant dès lors toujours futur par rapport au début de l'émission, le contrôle de l'autorisation est positif sans qu'aucune unité de comptabilisation soit nécessaire.

Ainsi, si la variable Rdate est plus grande que la somme du temps courant et de la durée allouée, (Rdate > TC + AT), on considère la variable Rdate non valide et l'unité de sécurité va comptabiliser une unité de comptabilisation CT et calculer la nouvelle variable selon la formule : Rdate = TC + AT.

Si la variable Rdate est dans le passé, l'unité de sécurité SC détermine s'il convient d'utiliser la dernière variable Rdate connue pour définir le point de départ de l'autorisation ou s'il faut prendre le temps courant TC. Pour cela, il convient de savoir si la variable Rdate est suffisamment proche dans le passé pour que l'ajout d'une durée allouée (AT) permette de dépasser le temps courant.

Ce cas se présente lors d'une utilisation de ce même service quelque temps auparavant. Comme mentionné plus haut, la vérification se fait lorsqu'un nouveau message ECM contenant un mot de contrôle arrive.

L'unité de sécurité SC n'a pas les moyens pour déterminer si l'utilisateur a utilisé le service entre la fin du temps autorisé défini par la variable Rdate et l'arrivée du nouveau mot de contrôle.

Cette situation est illustrée sur la figure 1 par la zone RT. Dans cet exemple, l'utilisateur depuis l'entrée dans le service illustré par la flèche ES, a été débité de trois unités de comptabilisation (CT1, CT2, CT3) correspondant à trois durée allouée (AT1, AT2, AT3) qui ont successivement déplacé la variable temporelle aux valeurs Rdate1, Rdate2 et Rdate3. Les mots de contrôle CWA n'ont pas eu d'effet sur la comptabilisation puisque la variable Rdate était dans le futur contrairement à la situation lors de l'arrivée des mots de contrôle CWB, où une unité de comptabilisation était débitée.

Selon cet exemple, entre la fin de la période AT3 et l'arrivée du nouveau mot de contrôle CWC, rien n'indique que l'utilisateur soit resté sur ce service s'il commute avant l'arrivée de ce mot de contrôle CWC.

Ainsi, il existe une zone d'incertitude qui peut devenir non négligeable si la crypto-période est longue. C'est pourquoi lors de l'entrée dans le service, c'est la précédente variable temporelle Rdate0 qui est reprise dans la mesure où elle est proche dans le passé selon la formule :

$$\text{Rdate1} = \text{Rdate0} + \text{AT} \; ; \; \text{pour autant que Rdate1} > \text{TC} \quad (\text{TC} = \text{temps courant, AT} = \text{durée allouée par unité de facturation}).$$

Selon une variante particulière de l'invention, les messages ECM contenant les mots de contrôle permettent de définir le temps courant TC. Ainsi, le temps courant ne change pas entre deux ECM. Cette implémentation permet de se synchroniser facilement lorsqu'une telle émission est rejouée par l'intermédiaire d'un enregistreur vidéo numérique DVR par exemple.

Selon une variante de l'invention, le durée de l'unité de facturation et la durée allouée est contenue dans le message ECM. Ceci permet de varier la facturation selon les besoins et la valeur de l'objet en cour de diffusion. Il est ainsi possible de facturer un show célèbre plus cher que les nouvelles ou la météo.

Si une telle possibilité est utilisée, en plus de la variable temporelle Rdate, on stocke les conditions qui ont conduit à placer cette variable à l'instant qui est le sien, conditions comprenant l'unité de facturation et la durée allouée. A la réception d'un message ECM, en plus de vérifier si le temps courant TC est avant l'instant Rdate, on vérifie également si les conditions d'octroi sont inchangées. Sans cette vérification, il serait possible de recevoir un service bon marché pour fixer la variable Rdate dans le futur et recevoir ensuite un service à haute valeur ajoutée qui serait autorisé jusqu'à la fin de la période d'autorisation définie par la variable Rdate.

Si l'on suppose que la durée de la crypto-période peut être plus longue que l'unité de facturation, un test supplémentaire doit être effectué. En effet, il est possible que le résultat Rdate2 = Rdate1 + AT soit inférieur à TC (temps courant). Il faut dès lors calculer Rdate2' = Rdate2 + AT et comptabiliser deux unités de facturation.

Dans certaines applications, la durée allouée (AT) est très grande par rapport à la crypto-période. Dans ce cas la question de savoir si durant une crypto-période le temps était dépassé n'a pas d'importance. Dans ce type d'implémentation, on n'utilisera que le temps courant pour déterminer la nouvelle variable temporelle selon la formule: Rdate2 = TC + AT, sans tenir compte de la précédente valeur de Rdate.

Avec l'avènement des enregistreurs numériques, de nouvelles contraintes apparaissent. En effet, il est possible de rediffuser un contenu, aller en avant et en arrière à vitesse normale ou rapide. Il est donc nécessaire de prévoir cette facturation par unité de temps dans tous ces cas de figure.

Comme expliqué plus haut, selon la variante préférentielle de l'invention, le temps courant est celui qui est contenu dans les messages ECM. Ceci à pour conséquence que l'on est en avance rapide par exemple x5, le temps passe également 5 fois plus vite. Selon le mode décrit ci-dessus, on arrivera 5 fois plus vite à la variable temporelle Rdate avec pour conséquence que l'on paiera aussi 5 fois plus qu'à la vitesse initiale. Cette fonction est voulue afin d'empêcher un tiers de décrypter tous les messages ECM durant une unité de comptabilisation et rejouer ensuite, à la vitesse normale, l'ensemble de l'événement choisi pour une fraction de son prix normal.

C'est pourquoi les deux solutions décrites plus haut, à savoir la variable temporelle utilisant le temps du message pour définir la durée autorisée et l'utilisation de compteur de message, répondent à ce problème.

Un autre aspect à considérer est le mode de lecture en arrière. Dans ce cas, deux possibilités sont proposées.

La première solution est dite automatique car elle est basée sur une détermination interne à l'unité de sécurité. Si le temps courant est compris dans une durée allouée suivant la précédente durée autorisée, l'on est dans le cas d'une avance et la nouvelle durée autorisée est définie:

$$Rdate2 = Rdate1 + AT$$

Dans le cas où l'on se trouve dans une durée précédent la dernière durée autorisée, ceci signifie que l'on est en mode arrière. La nouvelle durée autorisée est définie :

$$Rdate2 = Rdate1 - AT$$

Ce mécanisme est illustré à la figure 2, la durée autorisée en cours étant représentée par AT2. Dans le cas de l'avance, le prochain message ECM est représenté par CW5. Ce dernier étant compris dans la durée = Rdate2 + AT, c'est donc le mode avance qui est appliqué et donc l'on détermine Rdate3 0 Rdate2 + AT.

Dans le cas où c'est le message contenant CW2 qui est présenté à l'unité de sécurité, ce dernier étant dans la période précédent celle autorisée, l'on détermine la nouvelle variable Rdate selon la valeur Rdate1 = Rdate2 - AT.

Une deuxième solution consiste à extraire les informations accompagnant le message ECM. Dans ces informations se trouve des précisions sur l'origine des données, télédiffusées ou enregistrées, et dans ce dernier cas, si l'enregistreur est en mode avance ou recul. Selon cet état, l'on appliquera l'une ou l'autre des méthodes décrites ce-dessus.

Selon un autre mode de réalisation, particulièrement adapté aux enregistreurs numériques, le chargement de la variable Rdate dans un mode de recul peut être faite d'une manière différente. Selon la méthode décrite précédemment, si l'utilisateur avance et recule autour du seuil de facturation, il lui sera décompté une unité de facturation alors qu'il aura juste eu la malchance d'exécuter son retour en arrière de quelques secondes. Pour résoudre ce problème, il est prévu de créer une zone à cheval sur la précédente zone autorisée telle que définie sur la figure 3. La période AT2 était en cours d'autorisation après la période AT1 lorsqu'un retour a été effectué. Dans ce cas, au lieu d'initialiser la variable temporelle Rdate pour une période AT1 adjacente de même durée, cette variable est initialisée de telle sorte que la période autorisée AT1' est à cheval sur la zone de facturation précédente. Pour ne pas léser l'utilisateur, seul une fraction du coût CT de la période lui sera facturé, cette fraction étant déterminée en fonction de la part que représente la zone hachurée par rapport à la période complète. Dans notre exemple, cette zone représente 50% de la durée d'une période et il sera comptabilisé 50% du coût initial. La période suivante AT2' est alors conventionnellement facturée pour une durée AT et un coût CT.

Dans la description précédente, la variable Rdate a été décrite comme un seul pointeur de temps. En fait, cette variable peut avoir plusieurs configuration.

La détermination d'une durée autorisée peut de faire soit par un couple pointeur et durée (Rdate et AT), soit par un couple pointeur début et pointeur fin (Rdatel et Rdateh). La présente demande bien que décrivant dans le détail la première solution pour des raisons de fatigue de la mémoire EEPROM couvre également l'implémentation de deux pointeurs.

Dans ce deuxième cas, il est possible pour diminuer le nombre d'écriture en mémoire, de ne changer qu'un pointeur à chaque période. En reprenant la figure 2, durant la période AT1, le pointeur Rdatel = A et Rdateh = B, (A, B, C, D étant le temps à cet instant). Lorsque le point B est atteint le pointeur Rdatel = C et le pointeur Rdateh reste inchangé. La période autorisée est comprise entre ces deux pointeurs. Avant de calculer cet intervalle il faudra déterminer lequel défini le début et lequel défini la fin de cette période.

Dans un mode particulier de réalisation utilisant deux pointeurs, il est possible de ne pas changer le pointeur de départ (Rdatel) et de repousser le pointeur de fin (Rdateh) à chaque paiement d'une unité de facturation. Tant que la nouvelle période est adjacente à la précédente, on conserve le pointeur de départ et l'on avance le pointeur de fin (Rdateh = Rdateh + AT). Ceci présente l'avantage d'autoriser une navigation avant/arrière à l'intérieur de cet intervalle sans demander de paiement supplémentaire. On considère que s'il y a eu un paiement pour cette tranche, il est possible d'y retourner sans nouveau paiement. Si par contre l'on saute dans une région qui n'est pas dans cette période autorisée et de plus hors d'une nouvelle période adjacente de comptabilisation (TC > Rdateh + AT), les deux pointeurs seront réinitialisés, le pointeur de départ étant égal au temps courant (Rdatel = TC) et le pointeur de fin étant égal au temps courant additionné de la durée autorisée (Rdateh = TC + AT).

**Revendications**

1. Méthode de comptabilisation temporelle d'accès à un flux de données encryptées par des mots de contrôle (CW) modifiés à des intervalles représentant une crypto-période (CP), ce flux étant reçu par une unité d'utilisateur (UU) reliée à une unité de sécurité (SC) en charge de vérifier les droits d'un utilisateur et de décrypter des messages (ECM) comprenant les mots de contrôle (CW), cette comptabilisation étant basée sur des unités de comptabilisation (CT) autorisant l'utilisation du service pour une durée allouée (AT), cette méthode comprenant les étapes suivantes:

   a. commutation par l'utilisateur sur un flux encrypté constituant un service à accès par unité de temps,
   b. réception par l'unité de sécurité (SC) de messages encryptés (ECM) contenant les mots de contrôle (CW) et des données propres au dit service permettant de déterminer la durée allouée (AT) et le coût (CT) de l'unité de comptabilisation,
   c. lecture d'une variable temporelle (Rdate) représentative de la durée durant laquelle l'utilisation dudit service est autorisée,
   d. détermination, sur la base du temps courant (TC) si l'on se situe durant la durée d'autorisation définie par la variable temporelle (Rdate), et dans l'affirmative, autoriser le service en renvoyant les mots de contrôle (CW) à l'unité d'utilisateur (UU),
   e. dans la négative, ordonner le débit du coût (CT) d'une unité de comptabilisation et déterminer si le temps courant (TC) est compris dans une durée allouée (AT) adjacente à la durée définie par la variable temporelle (Rdate), dans l'affirmative déterminer la nouvelle valeur de la variable temporelle (Rdate) afin de déplacer cette dernière d'une durée allouée (AT), et autoriser le service en renvoyant les mots de contrôle (CW) en clair à l'unité d'utilisateur,
   f. dans la négative charger la variable temporelle (Rdate) d'une durée allouée (AT) par rapport au temps courant (TC) et autoriser le service en renvoyant les mots de contrôle (CW) en clair à l'unité d'utilisateur.

2. Méthode de comptabilisation temporelle selon la revendication 1, **caractérisée en ce qu'**elle consiste à vérifier un crédit contenu dans l'unité de sécurité (SC) afin de déterminer s'il est au moins égal à l'unité de comptabilisation (CT).

3. Méthode de comptabilisation temporelle selon les revendications 1 et 2, **caractérisée en ce que** la nouvelle durée autorisée (Rdate') soit suit la dernière période autorisée (Rdate), soit précède la dernière période autorisée (Rdate) selon le sens de déplacement temporel dans le flux encrypté.

4. Méthode de comptabilisation temporelle selon la revendication 3, **caractérisée en ce que** le sens de déplacement est transmis à l'unité de sécurité (SC) avec les messages (ECM).

5. Méthode de comptabilisation temporelle selon la revendication 3, **caractérisée en ce que** le temps courant (TC) est extrait du message (ECM) et **en ce que** la durée autorisée (Rdate') suit la dernière période autorisée (Rdate) si le temps courant se trouve dans cette période, ou la durée autorisée (Rdate') précède la dernière période autorisée (Rdate) si le temps courant (TC) se trouve dans cette période.

6. Méthode de comptabilisation temporelle selon les revendications 3 à 5, **caractérisée en ce que** lorsque la nouvelle durée autorisée précède la dernière période autorisée, cette méthode consiste à :

   - déplacer la variable temporelle (Rdate) afin que la nouvelle durée autorisée recouvre partiellement l'ancienne durée autorisée, le rapport entre la partie recouverte et la nouvelle partie allouée permettant de réduire proportionnellement la valeur du coût (CT) débité.

7. Méthode de comptabilisation temporelle selon les revendications 1 à 6, **caractérisée en ce que** la variable temporelle (Rdate) comprend un pointeur de temps et une durée (AT) permettant de définir la période autorisée.

8. Méthode de comptabilisation temporelle selon la revendication 7, **caractérisée en ce que** les messages (ECM) comprennent une base de temps qui définit le temps courant (TC) et que la variable temporelle (Rdate) contient l'instant auquel l'autorisation d'utilisation du service prend fin selon cette base de temps.

9. Méthode de comptabilisation temporelle selon les revendications 7 et 8, **caractérisée en ce qu'**elle consiste à vérifier, au cas où la variable temporelle (Rdate) est dans le futur par rapport au temps courant (TC), si cette variable est au-delà d'un instant défini par la somme du temps courant (TC) et de la durée allouée (AT), et dans ce cas, considérer la variable temporelle (Rdate) comme hors de la durée d'autorisation.

10. Méthode de comptabilisation temporelle selon les revendications 1 à 6, **caractérisée en ce que** la variable temporelle (Rdate) comprend deux pointeurs (Rdatel, Rdateh) définissant le début et la fin de la durée durant laquelle l'utilisation dudit service est autorisée.

## Claims

1. A time accounting method of access to a stream of data encrypted by control words (CW) modified at intervals representing a crypto-period (CP), said stream being received by a user unit (UU) connected to a security module (SC) in charge of verifying the rights of a user and of decrypting messages (ECM) comprising the control words (CW), said accounting being based on accounting units (CT) authorising the use of the service for an assigned time (AT), said method comprising the following stages:

   a. commutation by the user on an encrypted stream constituting an access service per time unit,
   b. reception by the security module (SC) of encrypted messages (ECM) containing the control words (CW) and data specific to said service allowing to determine the assigned time (AT) and its cost (CT) of the accounting unit,
   c. reading of a time variable (Rdate) representative of the time during which the use of said service is authorised,
   d. determination, on the basis of the time-current (TC) if it is placed during the authorisation time defined by the time variable (Rdate), and if this is the case, to authorise the service by resending the control words (CW) to the user unit (UU),
   e. if this is not the case, to order the debit of an accounting unit (CT) and to determine if the time-current (TC) is comprised in an assigned time (AT) adjacent to the time interval defined by the time variable (Rdate), if this is the case to determine the new value of the time variable (Rdate) in order to move the latter from an assigned time (AT), and to authorise the service by resending the control words (CW) in plaintext to the user unit,
   f. if this is not the case, to load the time variable (Rdate) of an assigned time (AT) starting from the time-current (TC) and to authorise the service by resending the control words (CW) in plaintext to the user unit.

2. A time accounting method according to Claim 1, **characterised in that** it consists in verifying a credit contained in the security module (SC) in order to determine if it is at least equal to the accounting unit (CT).

3. A time accounting method according to Claims 1 or 2, **characterised in that** the new authorised time (Rdate') either follows the last authorised period (Rdate) or precedes the last authorised period (Rdate) according to the sense of time movement in the encrypted stream.

4. A time accounting method according to Claim 3, **characterised in that** the sense of movement is transmitted to the security module (SC) with the messages (ECM) by the user unit (UU).

5. A time accounting method according to Claim 3, **characterised in that** the time-current (TC) is extracted from the message (ECM), and **in that** the authorised time (Rdate') follows the last authorised period (Rdate) if the time-current is in this period, or the authorised time (Rdate') precedes the last authorised period (Rdate) if the time-current (TC) is in this period.

6. A time accounting method according to Claims 3 to 5, **characterized in that**, when the new authorised period is before the current authorised period, this method consisting of :

   - moving the time variable (Rdate) in order that the new authorised period partly overlap the previous period, the ratio between the overlapped region and the new region being used to determine the reduction of the debited cost (CT).

7. A time accounting method according to Claims 1 to 6, **characterized in that** the time variable (Rdate) comprises a time pointer and a duration (AT) thus permitting to define the authorised period.

8. A time accounting method according to Claim 7, **characterised in that** the messages (ECM) comprise a time base that defines the time-current (TC) and that the time variable (Rdate) contains the moment in which the authorisation of use of the service ends according to this time base.

9. A time accounting method according to Claims 7 or 8, **characterised in that** it consists in verifying, in the case where the time variable (Rdate) is in the future compared with the time-current (TC), if this time variable is beyond a moment defined by the sum of the time-current (TC) and of the assigned time (AT), and if this is the case, to consider the time variable (Rdate) as out of the authorisation time.

10. A time accounting method according to Claims 1 to 6, **characterized in that**, the time variable (Rdate) comprises two pointers (Rdatel, Rdateh) defining the start and the end of the period during which the service is authorised.

**Patentansprüche**

1. Verfahren der Zeitabrechnung des Zugriffs auf einen Datenstrom, der durch Steuerwörter (CW) verschlüsselt wird, die in Intervallen modifiziert werden, die eine Kryptoperiode (CP) darstellen, wobei dieser Datenstrom durch eine Benutzereinheit (UU) empfangen wird, die mit einer Sicherheitseinheit (SC) verbunden ist, die die Aufgabe hat, die Rechte eines Benutzers zu überprüfen und Nachrichten (ECM), die die Steuerwörter (CW) enthalten, zu entschlüsseln, und wobei diese Abrechnung auf Abrechnungseinheiten (CT) beruht, die die Nutzung eines Dienstes für eine bewilligte Zeitdauer (AT) autorisieren, während das Verfahren die folgenden Schritte umfasst:

a) Umschaltung durch den Benutzer auf einen verschlüsselten Datenstrom, der einen Dienst mit Zugriff nach Zeiteinheiten darstellt,
b) Empfang durch die Sicherheitseinheit (SC) von verschlüsselten Nachrichten (ECM), die die Steuerwörter (CW) und dem Dienst eigene Daten enthalten, die es ermöglichen, die bewilligte Zeitdauer (AT) und den Preis (CT) der Abrechnungseinheit zu ermitteln,
c) Auslesen einer Zeitvariablen (Rdate), die für die Zeitdauer steht, während der eine Nutzung des benannten Dienstes autorisiert ist,
d) Ermittlung auf der Basis der laufenden Zeit (TC), ob man sich innerhalb der durch die Zeitvariable (Rdate) definierten Zeitdauer der Autorisierung befindet, und zutreffendenfalls eine Autorisierung des Dienstes durch Rücksendung der Steuerwörter (CW) an die Benutzereinheit (UU),
e) wenn nicht zutreffend, die Belastung der Kosten (CT) einer Abrechnungseinheit anzuweisen und zu ermitteln, ob die laufende Zeit (TC) sich innerhalb einer bewilligten Zeitdauer (AT) befindet, die an die durch die Zeitvariable (Rdate) definierte Zeitdauer angrenzt, zutreffendenfalls den neuen Wert der Zeitvariablen (Rdate) zu ermitteln, um diese um eine bewilligte Zeitdauer (Rdate) zu verschieben, und den Dienst durch Rücksendung der unverschlüsselten Steuerwörter (CW) an die Benutzereinheit zu autorisieren,
f) wenn nicht zutreffend, die Zeitvariable (Rdate) gegenüber der laufenden Zeit (TC) um eine bewilligte Zeitdauer (AT) nachzuladen und den Dienst durch Rücksendung der unverschlüsselten Steuerwörter (CW) an die Benutzereinheit zu autorisieren.

2. Verfahren der Zeitabrechnung nach Anspruch 1, **dadurch gekennzeichnet, dass** es darin besteht, ein in der Sicherheitseinheit (SC) enthaltenes Guthaben zu überprüfen, um festzustellen, ob es zumindest einer Abrechnungseinheit (CT) gleich ist.

3. Verfahren der Zeitabrechnung nach Ansprüchen 1 und 2, **dadurch gekennzeichnet, dass** die neue autorisierte Zeitdauer (Rdate') je nach der zeitlichen Bewegungsrichtung im verschlüsselten Datenstrom entweder auf die letzte autorisierte Periode (Rdate) folgt oder der letzten autorisierten Periode (Rdate) vorausgeht.

4. Verfahren der Zeitabrechnung nach Anspruch 3, **dadurch gekennzeichnet, dass** die Bewegungsrichtung mit Nachrichten (ECM) an die Sicherheitseinheit (SC) übermitteln wird.

**5.** Verfahren der Zeitabrechnung nach Anspruch 3, **dadurch gekennzeichnet, dass** die laufende Zeit (TC) aus der Nachricht (ECM) herausgezogen wird, und **dadurch**, dass die autorisierte Zeitdauer (Rdate') auf die letzte autorisierte Periode (Rdate) folgt, wenn die laufende Zeit in dieser Periode liegt, oder die autorisierte Zeitdauer (Rdate') der letzten autorisierten Periode (Rdate) vorausgeht, wenn die laufende Zeit (TC) in dieser Periode liegt.

**6.** Verfahren der Zeitabrechnung nach Ansprüchen 3 bis 5, **dadurch gekennzeichnet, dass**, wenn die neue autorisierte Zeitdauer der letzten autorisierten Periode vorausgeht, dieses Verfahren daraus besteht:

- die Zeitvariable (Rdate) zu verschieben, damit die neue autorisierte Zeitdauer die alte autorisierte Zeitdauer teilweise überlappt, wobei es das Verhältnis zwischen dem überlappenden Anteil und dem neuen bewilligten Teil erlaubt, den belasteten Preis (CT) proportional zu reduzieren.

**7.** Verfahren der Zeitabrechnung nach Ansprüchen 1 bis 6, **dadurch gekennzeichnet, dass** die Zeitvariable (Rdate) einen Zeitzeiger und eine Zeitdauer (AT) umfasst, mit denen die autorisierte Periode definiert werden kann.

**8.** Verfahren der Zeitabrechnung nach Anspruch 7, **dadurch gekennzeichnet, dass** die Nachrichten (ECM) eine Zeitbasis umfassen, die die laufende Zeit (TC) definiert, und dass die Zeitvariable (Rdate) den Augenblick enthält, in dem dieser Zeitbasis zufolge die Autorisierung der Nutzung des Dienstes endet.

**9.** Verfahren der Zeitabrechnung nach Ansprüchen 7 und 8, **dadurch gekennzeichnet, dass** es darin besteht zu überprüfen, ob die Zeitvariable (Rdate), falls sie relativ zur laufenden Zeit (TC) in der Zukunft liegt, jenseits eines Zeitpunktes liegt, der durch die Summe aus laufender Zeit (TC) und bewilligter Zeitdauer (AT) definiert wird, und in diesem Falle die Zeitvariable (Rdate) als ausserhalb der Autorisierungszeitdauer liegend zu betrachten.

**10.** Verfahren der Zeitabrechnung nach Ansprüchen 1 bis 6, **dadurch gekennzeichnet, dass** die Zeitvariable (Rdate) zwei Zeiger (Rdatel, Rdateh) umfasst, die den Anfang und das Ende der Zeitdauer definieren, während der die Nutzung des Dienstes autorisiert ist.

Fig. 1

Fig. 2

Fig. 3